# EUROPÄISCHE PATENTSCHRIFT

(11) **EP 1 950 479 B1**
(45) Veröffentlichungstag und Bekanntmachung des Hinweises auf die Patenterteilung: **11.08.2010**
(21) Anmeldenummer: 08100532.4
(22) Anmeldetag: 16.01.2008
(51) Int. Cl.: F16L 3/10, F16L 55/035

(54) **Rohrschelle**
Pipe clip
Collier

(30) Priorität: 25.01.2007 DE 102007000035
(43) Veröffentlichungstag der Anmeldung: 30.07.2008
(73) Patentinhaber: HILTI Aktiengesellschaft, 9494 Schaan (LI)
(72) Erfinder: Unverzagt, Stefan, 6800 Feldkirch (AT); Schierscher, Gabriel, 9494 Schaan (LI)
(74) Vertreter: Wildi, Roland

(56) Entgegenhaltungen:
- EP-A1- 0 884 518
- CH-A5- 562 980
- DE-A1- 1 650 019
- DE-C1- 4 205 402
- DE-U1- 8 223 337
- GB-A- 718 527

## Beschreibung

Die Erfindung betrifft eine Rohrschelle mit zumindest einem eine Krümmung aufweisenden Schellenbügel und mit zumindest einem Einlageelement, wobei der zumindest eine Schellenbügel zumindest eine Ausnehmung für die Festlegung des Einlageelementes und zwei benachbart dazu verlaufende Bügelabschnitte aufweist, und wobei das Einlageelement zumindest einen von einer Anlagefläche abragenden Hintergreifabschnitt aufweist, der die benachbart zueinander angeordneten Längsränder der Bügelabschnitte bereichsweise hintergreift.

Eine derartige Rohrschelle dient der Fixierung und Halterung von Leitungen, wie z. B. von Rohren, Kabeln oder dergleichen, an einem Untergrund oder an einem Träger mittels eines Befestigungselementes, wie beispielsweise einer Gewindestange. Zur Isolierung der fixierten Leitung, wie z. B. zur Schallisolierung von Rohrleitungen gegenüber Gebäudeteilen werden Einlageelemente aus einem elastischen Material an dem Schellenbügel vorgesehen, welche gegen unerwünschte Verschiebung am Schellenbügel festgelegt sind.

Beispielsweise weist das Einlageelement dazu seitlich angeordnete, U-förmige Halteabschnitte auf, die den Schellenbügel seitlich umgreifen. Ein derartiges Einlageelement ist z. B. in US 4,189,807 und DE 82 23 337 U1 gezeigt. Nachteilig an dieser Art von Einlageelement ist der verhältnismässig grosse Materialverbrauch zur Ausbildung des Einlageelementes.

Zur Reduzierung des Materialverbrauchs ist es auch möglich, das Einlegeelement als im Querschnitt sektorförmige Kunststoffbänder, eingelegt in die Schellenbügel, auszubilden, wie es in CH 562 980 A5 offenbart ist.

Aus GB 718,527 und DE 42 05 402 C1 ist eine Rohrschelle mit einem eine Krümmung aufweisenden Schellenbügel und einem Einlageelement bekannt, wobei der Schellenbügel eine Ausnehmung für die Festlegung des Einlageelementes und zwei benachbart dazu verlaufende Bügelabschnitte aufweist. Das Einlageelement weist einen von einer Anlagefläche abragenden Hintergreifabschnitt auf, der die benachbart zueinander angeordneten Längsränder der Bügelabschnitte bereichsweise hintergreift.

Nachteilig an der bekannten Lösung ist, dass die Bügelabschnitte des Schellenbügels leicht zueinander verschiebbar sind und dadurch die Rohrschelle instabil ist. Insbesondere bei Rohrschellen für Leitungen mit grossem Durchmesser wirkt sich dieses Verhalten des Schellenbügels sehr nachteilig aus.

Aufgabe der Erfindung ist es, eine Rohrschelle mit zumindest einem Schellenbügel und einem Einlageelement zu schaffen, die auch für Leitungen mit grossen Durchmessern stabil sowie einfach und wirtschaftlich zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung ist zumindest ein die beiden Bügelabschnitte verbindender, krümmungsseitig nach aussen abragender Verstärkungssteg vorgesehen, der einen krümmungsseitig innenliegenden, zu der zumindest einen Ausnehmung hin offenen Freiraum ausbildet und die Bügelabschnitte zueinander aussteift und eine Querverschiebung zwischen diesen verhindert.

Der von dem Verstärkungssteg geschaffene Freiraum dient der bereichsweisen Aufnahme des den Schellenbügel krümmungsseitig aussen überragenden Abschnitt des Hintergreifabschnitts des Einlageelementes in dem der zumindest einen Ausnehmung benachbarten Bereichs des Schellenbügels.

Da der Freiraum zu der zumindest einen Ausnehmung hin offen ist, kann der Hintergreifabschnitt des Einlageelementes einfach in die schlitzförmige Ausnehmung eingezogen werden, was eine Anordnung einer grösseren Hinterschnittfläche des Hintergreifabschnitts als bei einem einclipsbaren Einlageelement ermöglicht. Zudem muss nur ein geringeres Spiel zwischen dem Hintergreifabschnitt und den Längsrändern der Bügelabschnitte vorgesehen werden. Dies zusammen führt zu grösseren Haltekräften des festgelegten Einlageprofils, als bei einer einclipsbaren Lösung möglich sind.

Das Einlageelement weist auf seiner gesamten Längserstreckung vorteilhaft die gleiche Ausgestaltung auf und ist somit einfach und kostengünstig herstellbar. Des Weiteren ist der Materialbedarf zur Fertigung des Einlageelementes geringer als bei einem Einlageelement, das den Schellenbügel seitlich umgreifende Halteabschnitte aufweist.

Das Einlageelement ist einfach montierbar und auch demontierbar. Die Rohrschelle kann mit oder ohne das Einlageelement verwendet werden, wobei der Anwender bei Bedarf das Einlageelement einfach aus der Rohrschelle entfernen kann. Zudem kann der Anwender je nach Bedarf das an dem Schellenbügel festgelegte Einlageelement einfach und schnell gegen ein anderes, den Erfordernissen entsprechendes Einlageelement an der Rohrschelle ersetzen.

Vorteilhaft weist der zumindest eine Verstärkungssteg zwei Rampenabschnitte und einen beabstandet zu dem Schellenbügel angeordneten Verbindungsabschnitt auf. Die Enden des Verstärkungssteges sind beispielsweise jeweils mittels Schweissen oder Löten mit den Bügelabschnitten des Schellenbügels formschlüssig verbunden.

Bevorzugt ist der Verbindungsabschnitt zumindest bereichsweise krümmungsseitig nach aussen gebogen, wodurch eine vorteilhafte Aussteifung des Schellenbügels gewährleistet wird. Durch die daraus resultierende im Wesentlichen U-förmige Ausgestaltung, lässt sich einfach ein ausreichend grosser Freiraum für den, den Schellenbügel krümmungsseitig aussen überragenden Abschnitt des Hintergreifabschnitts des Einlageelementes ausbilden.

Vorzugsweise ist der zumindest eine Verstärkungssteg eine am Schellenbügel ausgebildete Sicke, welche einfach und kostengünstig an dem Schellenbügel ausformbar ist. Vorteilhaft ist der Schellenbügel aus Blech in einem Stanz-/Biegeverfahren gefertigt. Beispielsweise wird der Schellenbügel aus einem Flachmaterial ausgestanzt, mit mehreren linear hintereinander angeordneten sowie zueinander beabstandeten Ausnehmungen versehen. Die zwischen den Ausnehmungen verbleibenden Abschnitte werden gesickt und bilden die Verstärkungsstege des Schellenbügels aus.

Bevorzugt sind zumindest drei Verstärkungsstege sowie zwei zwischen diesen angeordnete Ausnehmungen an dem zumindest einen Schellenbügel vorgesehen. Weist die Rohrschelle am Schellenbügel krümmungsseitig beziehungsweise radial nach aussen abragende Flansche auf, so sind zwei Verstärkungsstege vorteilhaft jeweils im Bereich der Abbiegestelle der Flansche vorgesehen, deren krümmungsseitig innenliegender Freiraum einerseits zu den Ausnehmungen und andererseits nach aussen hin offen sind. Der zumindest eine weitere Verstärkungssteg ist zwischen den Ausnehmungen angeordnet, wobei dessen krümmungsseitig innenliegender Freiraum zu den benachbarten Ausnehmungen offen ist und diese verbindet.

Vorzugsweise ist ein Anschlusskopf an dem zumindest einen Verstärkungssteg angeordnet. Ein entsprechender Abschnitt des Verstärkungssteges weist vorteilhaft einen ebenen Plateauabschnitt auf, an dem beispielsweise eine Mutter als Anschlusskopf zur Festlegung der Rohrschelle an einem Untergrund mittels eines Befestigungselementes angeordnet ist.

Die Erfindung wird nachstehend anhand eines Ausführungsbeispieles näher erläutert. Es zeigen:
- Fig. 1: Eine erfindungsgemässe Rohrschelle in der Seitenansicht;
- Fig. 2: einen Schnitt durch einen Schellenbügel entlang Linie II-II in Fig. 1; und
- Fig. 3: einen Schnitt durch den Schellenbügel entlang Linie III-III in Fig. 1.

Grundsätzlich sind in den Figuren gleiche Teile mit den gleichen Bezugszeichen versehen.

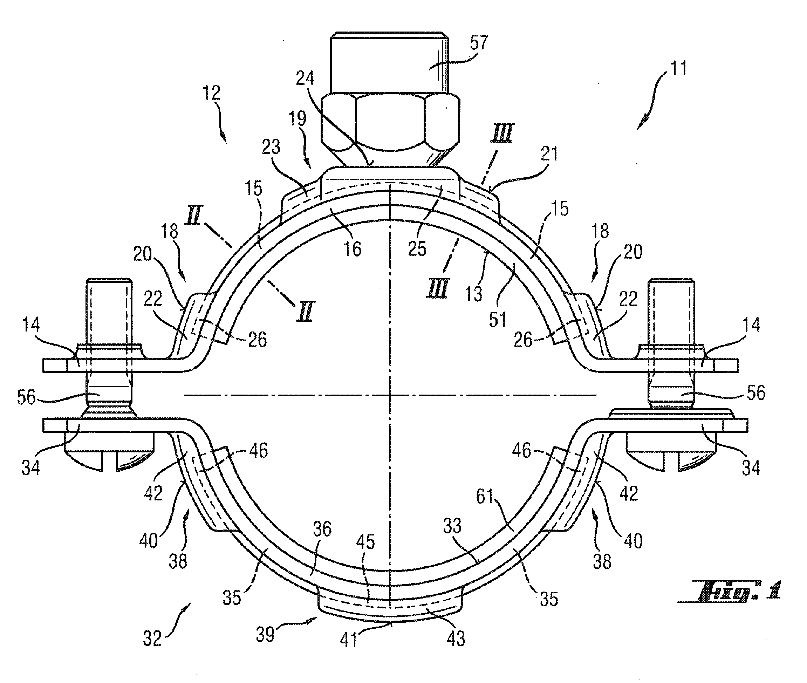

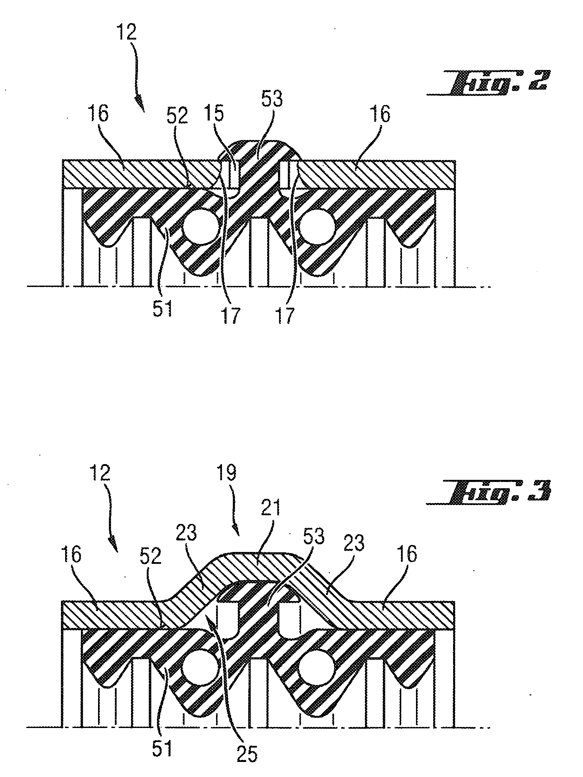

Die in den Figuren 1 bis 3 dargestellte Rohrschelle 11 weist zwei Schellenbügel 12 und 32 auf, an denen jeweils ein Einlageelement 51 und 61 angeordnet ist. Die Schellenbügel 12 und 32 weisen jeweils einen halbkreisförmig gebogenen Abschnitt 13 bzw. 33 als Krümmung sowie an deren freien Enden krümmungsseitig beziehungsweise radial nach aussen abragende Flansche 14 bzw. 34 auf. Über in den Flanschen 14 und 34 angeordnete Spannschrauben 56 sind die beiden Schellenbügel 12 und 32 miteinander verspannbar. Weiter weist jeder Schellenbügel 12 und 32 zwei Ausnehmungen 15 bzw. 35 für die Festlegung des Einlageelementes 51 bzw. 61 und benachbart dazu zwei zueinander verlaufende Bügelabschnitte 16 bzw. 36 auf.

Jedes Einlageelement 51 und 61 weist einen von einer Anlagefläche 52 abragenden Hintergreifabschnitt 53 auf, der die benachbart zueinander angeordneten Längsränder 17 der Bügelabschnitte 16 bzw. 36 bereichsweise hintergreift.

An jedem Schellenbügel 12 und 32 sind drei die beiden Bügelabschnitte 16 bzw. 36 verbindende, krümmungsseitig beziehungsweise radial nach aussen abragende Verstärkungsstege 18, 19 bzw. 38, 39 vorgesehen, die jeweils einen krümmungsseitig innenliegenden, zu den Ausnehmungen 15 bzw. 35 hin offenen Freiraum 25, 26 bzw. 45, 46 ausbilden. Jeder Verstärkungssteg 18, 19, 38 und 39 weist zwei Rampenabschnitte 22, 23, 42 und 43 auf, die mit einem entsprechenden Verbindungsabschnitt 20, 21, 40 bzw. 41 sowie mit den Bügelabschnitten 16 bzw. 36 verbunden sind. Die Verstärkungsstege 18, 19, 38 und 39 sind am Schellenbügel ausgebildete Sicken und krümmungsseitig nach aussen gebogen. Jeweils im Abbiegebereich zwischen den Flanschen 14 bzw. 34 sind zwei Verstärkungsstege 18 bzw. 38 und in der Mitte zwischen den Ausnehmungen 15 bzw. 35 ist jeweils ein Verstärkungssteg 19 bzw. 39 an den Schellenbügeln 12 und 32 ausgebildet. An dem Verbindungsabschnitt 21 des Verstärkungssteges 19 ist ein Plateau 24 für die Anordnung einer Mutter als Anschlusskopf 57 für die Rohrschelle 11 ausgebildet.

## Patentansprüche

1. Rohrschelle mit zumindest einem eine Krümmung aufweisenden Schellenbügel (12, 32) und mit zumindest einem Einlageelement (51, 61), wobei
der zumindest eine Schellenbügel (12, 32) zumindest eine Ausnehmung (15, 35) für die Festlegung des Einlageelementes (51, 61) und zwei benachbart dazu verlaufende Bügelabschnitte (16, 36) aufweist, und wobei
das Einlageelement (51, 61) zumindest einen von einer Anlagefläche (52) abragenden Hintergreifabschnitt (53) aufweist, der die benachbart zueinander angeordneten Längsränder (17) der Bügelabschnitte (16, 36) bereichsweise hintergreift, **dadurch gekennzeichnet, dass**
zumindest ein die beiden Bügelabschnitte (16, 36) verbindender, krümmungsseitig nach aussen abragender Verstärkungssteg (18, 19, 38, 39) vorgesehen ist, der einen krümmungsseitig innenliegenden, zu der zumindest einen Ausnehmung (15, 35) hin offenen Freiraum (25) ausbildet und wobei der Freiraum (25) bereichsweise den den Schellenbügel (12, 32) in dem der zumindest einen Ausnehmung (15, 35) benachbarten Bereich krümmungsseitig aussen überragenden Abschnitt des Hintergreifabschnitts (53) aufnimmt.

2. Rohrschelle nach Anspruch 1, **dadurch gekennzeichnet, dass** der Verstärkungssteg (18, 19, 38, 39) zumindest bereichsweise krümmungsseitig nach aussen gebogen ist.

3. Rohrschelle nach Anspruch 1 oder 2, **dadurch gekennzeichnet, dass** der zumindest eine Verstärkungssteg (18, 19, 38, 39) eine am Schellenbügel (12, 32) ausgebildete Sicke ist.

4. Rohrschelle nach einem der Ansprüche 1 bis 3, **dadurch gekennzeichnet, dass** zumindest drei Verstärkungsstege (18, 19, 38, 39) und zumindest zwei zwischen diesen angeordnete Ausnehmungen (15, 35) an dem zumindest einen Schellenbügel (12, 32) vorgesehen sind.

5. Rohrschelle nach einem der Ansprüche 1 bis 4, **dadurch gekennzeichnet, dass** ein Anschlusskopf (57) an dem zumindest einen Verstärkungssteg (19) angeordnet ist.

## Claims

1. Pipe clamp comprising at least one curved clumping strap (12, 32) and at least one insert element (51, 61),
the at least one clamping strap (12, 32) having at least one recess (15, 35) for fixing the insert element (51, 61) and two strap portions (16, 36) extending adjacent thereto, and
the insert element (51, 61) having at least one rear engagement portion (53) projecting from a bearing surface (52) and in some areas engaging behind the longitudinal edges (17) of the strap portions (16, 36) arranged adjacent to one another, **characterised in that**
at least one reinforcing web (18, 19, 38, 39) projecting towards the outside on the curved side and connecting the two strap portions (16, 36) is provided and forms a free space (25) arranged on the inside on the curved side and open towards the at least one recess (15, 35) and **in that** the free space (25) in some areas accommodates the portion of the rear engagement portion (53) projecting beyond the clamping strap (12, 32) on the outside on the curved side in the region adjacent to the at least one recess (15, 35).

2. Pipe clamp according to claim 1, **characterised in that** the reinforcing web (18, 19, 38, 39) is bent towards the outside on the curved side at least in some areas.

3. Pipe clamp according to claim 1 or claim 2, **characterised in that** the at least one reinforcing web (18, 19, 38, 39) is a bead formed on the clamping strap (12, 32)

4. Pipe clamp according to one of claims 1 to 3, **characterised in that** at least three reinforcing webs (18, 19, 38, 39) and at least two recesses (15, 35) arranged therebetween are provided on the at least one clamping strap (12, 32).

5. Pipe clamp according to one of claims 1 to 4, **characterised in that** a connection head (57) is arranged on the at least one reinforcing web (19).

## Revendications

1. Collier pour tuyau comportant au moins une bride de collier (12, 32) présentant une courbure, et comportant au moins un élément rapporté (51, 61), dans lequel
la au moins une bride de collier (12, 32) comporte au moins un évidement (15, 35) pour la fixation de l'élément rapporté (51, 61) et deux parties de bride (16, 36) s'étendant de manière adjacente à celui-ci, et dans lequel
l'élément rapporté (51, 61) comporte au moins une partie de prise arrière (53) faisant saillir à partir d'une surface de contact (52), ladite partie le prise arrière étant, dans certaines zones, en prise derrière les zones des rebords longitudinaux (17) des parties de bride (16, 36) disposés adjacents l'un à l'autre, **caractérisé en ce que**
au moins une barrette de renforcement (18, 19, 38, 39) faisant saillie vers l'extérieur côté courbure et reliant les deux parties de bride (16, 36) est prévue, laquelle barrette forme un espace libre (25) ouvert jusqu'au au moins un évidement (15, 35) et situé à l'intérieur côté courbure, et dans lequel l'espace libre (25) reçoit, dans certaines zones, la bride de collier (12, 32) dans la partie de la partie de prise arrière (53) faisant saillie vers l'extérieur côté courbure, dans la zone adjacente au au moins un évidement (15, 35).

2. Collier pour tuyau selon la revendication 1, **caractérisé en ce que** la barrette de renfoncement (18, 19, 38, 39) est incurvée vers l'extérieur côté courbure, au moins dans certaines zones.

3. Collier pour tuyau selon la revendication 1 ou 2, **caractérisé en ce que** la au moins une barrette de renforcement (18, 19, 38, 39) est une moulure formée sur la bride de collier (12, 32).

4. Collier pour tuyau selon l'une quelconque des revendications 1 à 3, **caractérisé en ce qu'**au moins trois barrettes de renforcement (18, 19, 38, 39) et au moins deux évidements (15, 35) agencés entre celles-ci sont prévus sur la au moins une bride de collier (12, 32).

5. Collier pour tuyau selon l'une quelconque des revendications 1 à 4, **caractérisé en ce qu'**une tête de raccordement (57) est agencée sur la au moins une barrette de renforcement (19).
